(19) Europäisches Patentamt

European Patent Office

Office européen des brevets

(11) EP 4 738 636 A1

(12) **EUROPEAN PATENT APPLICATION**

(43) Date of publication:
06.05.2026 Bulletin 2026/19

(21) Application number: 24209989.3

(22) Date of filing: 30.10.2024

(51) International Patent Classification (IPC):
$H02J\ 3/38^{(2026.01)}$  $H02J\ 3/32^{(2026.01)}$

(52) Cooperative Patent Classification (CPC):
H02J 3/381; H02J 3/32; H02J 2101/24;
H02J 2103/30; H02J 2105/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Rolls-Royce Solutions GmbH
88045 Friedrichshafen (DE)

(72) Inventors:
• SINAT, Muhammet Hasan
13409 Berlin (DE)
• EL BAKKALI-BELLINI, Issam
12105 Berlin (DE)

(74) Representative: Kordel, Mattias et al
Gleiss Große Schrell und Partner mbB
Patentanwälte Rechtsanwälte
Leitzstrasse 45
70469 Stuttgart (DE)

(54) **METHOD FOR OPERATING A MICROGRID, COMPUTER PROGRAM, CONTROL DEVICE FOR CONTROLLING A MICROGRID, AND MICROGRID**

(57) The invention relates to a method for operating a microgrid (1), wherein the microgrid (1) comprises at least one power source (3) and at least one dynamic load (5), the at least one power source (3) and the at least one dynamic load (5) being electrically coupled via an AC bus as a common connecting point (7), wherein
- in a first step S1: based on historical data comprising a historical input vector of at least one input quantity, a historical output vector of at least two output quantities (9) of the microgrid, and a reference trajectory comprising target values for the at least two output quantities, a control input vector (27) is calculated by minimizing a deviation between the target values and a predicted output vector (29), wherein
- in a second step S2: the at least one power source (3) is controlled with at least a subset of the control input vector (27) as an actual control vector (11), and wherein
- the at least two output quantities (9) comprise a voltage amplitude (9.1) and a frequency (9.2) at the AC bus, and the reference trajectory comprises nominal values for the voltage amplitude (9.1) and the frequency (9.2) as the target values.

Fig. 1

EP 4 738 636 A1

**Description**

The invention relates to a method for operating a microgrid, a computer program, a control device for controlling a microgrid, and a microgrid.

An isolated AC power grid, also referred to as a microgrid, which is powered by at least one power source, or distributed generating assets, such as power electronics power conversion systems or conventional rotating generators, distributed particularly in the sense that they do not communicate with each other, but only receive setpoints from a superseding central controller, has its output quantities at an AC bus as a common connecting point, such as voltage and frequency, typically deviating from desired nominal values in the case of fast load ramps on a time scale of, e.g. less than one second. Only after a certain time the nominal values are again reached. However, heavy oscillations may happen, and in severe cases these oscillations remain in steady-state, i.e., the nominal voltage and frequencies are not reached at all. This phenomenon is especially observable when a control latency - in particular caused by a measurement latency - is larger than a few tens of milliseconds. Conventional control devices are not designed for latencies as large as, e.g. 500 ms, as they cannot guarantee that the voltage and frequency at the AC bus converge to the nominal values following a load ramp.

It is therefore an objective of the invention to provide a method for operating a microgrid, a computer program, a control device for controlling a microgrid, and a microgrid which preferably at least in part overcomes the above stated issues.

This objective is achieved by providing the present technical teachings, in particular the teachings of the independent claims as well as the teachings of the dependent claims and the preferred embodiments disclosed in the description.

According to a first aspect, the objective is in particular achieved by providing a method for operating a microgrid, wherein the microgrid comprises at least one power source and at least one dynamic load, the at least one power source and the at least one dynamic load being electrically coupled via an AC bus as a common connecting point, wherein

- in a first step S1: based on historical data comprising a historical input vector of at least one input quantity, a historical output vector of at least two output quantities of the microgrid, and a reference trajectory comprising target values for the at least two output quantities, a control input vector is calculated by minimizing a deviation between the target values and a predicted output vector, preferably using a direct data driven or behavioral predictive algorithm, wherein
- in a second step S2: the at least one power source is controlled with at least a subset of the control input vector as an actual control vector, and wherein
- the at least two output quantities comprise a voltage amplitude and a frequency at the AC bus, and the reference trajectory comprises nominal values for the voltage amplitude and the frequency as the target values.

By calculating the control input vector based on historical data and the reference trajectory comprising the target values for the at least two output quantities, i.e. nominal values for the voltage amplitude and the frequency, the output quantities can easily achieve a speedy and steady return to their nominal values, without showing heavy oscillations or persistent deviations from the target values after undergoing a load ramp, even in less than one second. Further, it is not necessary to have or establish a physical or parametric model for the microgrid in order to achieve these results. Still further, the method easily provides for handling even larger control latencies of the order of, e.g., 500 ms.

Preferably, the method is repeated - i.e. the first and second steps S1 and S2 are repeated - with a frequency from 0.2 Hz to 100 Hz, preferably from 0.5 Hz to 50 Hz, preferably from 0.7 Hz to 20 Hz, preferably from 1 Hz to 10 Hz. In particular in this case, a most speedy return to the nominal values can be achieved even in the case of fast load ramps of less than one second.

In the context of the present technical teachings, a microgrid is in particular understood to mean a local electrical grid which is at least capable to operate in an island mode. The island mode is a mode in which the microgrid operates electrically isolated from - or in other words not connected to - a wider electric power system such as a supra-regional, national or transnational power grid. In an embodiment, the microgrid is operated in the island mode. However, it is conceivable that the microgrid additionally is capable to be operated in a grid-connected mode, synchronous with a larger grid such as a supra-regional, national or transnational power grid.

In particular, the microgrid is adapted to control frequency and voltage amplitude at the common connecting point, namely the AC bus, independent from external requirements or provisions.

In the context of the present technical teachings, a dynamic load is in particular understood to mean a load which varies in time, and in particular undergoes load ramps, namely when load is absorbed or thrown off, in particular on fast time scales of less than one second.

In an embodiment, the control input vector is calculated, in the first step S1, by minimizing the deviation between the target values and the predicted output vector using a direct data driven or behavioral predictive algorithm.

In the alternative, or additionally, in the first step S1, the control input vector is calculated by minimizing the deviation between the target values and the predicted output vector using the historical data as observed raw data included in prior knowledge of the microgrid.

In the alternative, or additionally, in the first step S1, the control input vector is calculated by minimizing the deviation between the target values and the predicted output vector using the historical data as observed raw data included in prior knowledge of the microgrid to achieve a direct map from the historical data to the control input vector without an identification of a model.

In the context of the present technical teachings, a direct data driven or behavioral predictive algorithm is in particular understood to mean an algorithm which is not based on a (parametric) model, but uses observed raw data - the historical data - as prior knowledge about a system, the system being the microgrid in this case. In particular, such a data-driven algorithm sometimes is described as a nonparametric model.

In an embodiment, in the first step S1, the control input vector is calculated further based on an initial input vector of the at least one input quantity and an initial output vector of the at least two output quantities - the initial input vector and the initial output vector being collectively labelled "initial data" in the following -, wherein, in the second step S2, an actual output vector of the at least two output quantities is measured upon controlling the at least one power source with the actual control vector, and wherein the first and second steps S1 and S2 are repeated, wherein, in the first step S1 - particularly starting from the second iteration -, the initial input vector is updated with the actual control vector, and the initial output vector is updated with the actual output vector. Thus, the algorithm advantageously uses data - the initial data -, and prior knowledge - the historical data -, to predict the control input vector, and the initial data is updated in each step such that the algorithm can rapidly react to any changes.

In the context of the present technical teachings, that a vector is "updated" is in particular understood to mean that a certain number of the first vector elements is cancelled, the remaining vector elements are rearranged to replace the cancelled elements, i.e. to fill the gap, and the same certain number of the last vector elements, where finally the gap remains, are replaced by new values, in particular in accordance with a first in first out scheme.

In an embodiment, Data-Enabled Predictive Control (DeePC) is used as the behavioral or direct data driven predictive algorithm, as outlined, e.g., in: J. Coulson, J. Lygeros and F. Dörfler, "Data-Enabled Predictive Control: In the Shallows of the DeePC," 2019, 18th European Control Conference (ECC), Naples, Italy, 2019, pp. 307-312, and I. Markovsky, L. Huang, and F. Dörfler, "Data-driven control based on the behavioral approach: From theory to applications in power systems," IEEE Control Systems Magazine, vol. 43, no. 5, pp. 28-68, 2023. This is a particularly advantageous design of the method which is both reliable and cost-effective in computing performance.

In an embodiment, at least two input quantities are used as the at least one input quantity.

Preferably, the at least one power source comprises a DC power source and a voltage source converter, preferably an inverter, wherein the at least one power source is electrically coupled to the common connecting point via the voltage source converter.

Preferably, the at least two input quantities are an active power and a reactive power. In particular in this way the microgrid is capable to control both frequency and voltage amplitude at the AC bus independent of external requirements or provisions in the island mode. The frequency is preferably controlled by a respective variation of the active power, and the voltage amplitude is controlled by a respective variation of the reactive power.

Without wanting to be bound by theory, a DeePC algorithm makes use of historical data given as a historical vector $h$:

$$\boldsymbol{h} = (\boldsymbol{u}^d, \boldsymbol{y}^d)^T, \tag{1}$$

with the historical input vector

$$\boldsymbol{u}^d = \left(\boldsymbol{u}_0^d, \cdots, \boldsymbol{u}_{T-1}^d\right)^T, \tag{2}$$

and the historical ouput vector

$$\boldsymbol{y}^d = \left(\boldsymbol{y}_0^d, \cdots, \boldsymbol{y}_{T-1}^d\right)^T, \tag{3}$$

each comprising elements for $T$ discrete time steps, wherein further each element is itself a vector comprising as many elements as there are input quantities and output quantities, respectively, - in general $p$ output quantities and $m$ input quantities, in the present case $p = m = 2$, in particular:

$$\boldsymbol{u}_i^d = \left(P_i^d, Q_i^d\right)^T, \tag{4}$$

with the historical active power $P_i^d$ and the historical reactive power $Q_i^d$ at the $i$th time step, and

$$\boldsymbol{y}_i^d = \left(f_i^d, U_i^d\right)^T, \tag{5}$$

with the historical frequency $f_i^d$ and the historical voltage amplitude $U_i^d$ at the $i$th time step.

Next, Hankel matrices $\mathcal{H}_L\left(\boldsymbol{u}^d\right)$, $\mathcal{H}_L\left(\boldsymbol{y}^d\right)$ with depth - i.e. number of rows -$L$, with $T \geq L$, are constructed based on the historical vectors, and the rows of these Hankel matrices are divided using an - arbitrary - integer $N$ such that:

$$L = T_{ini} + N, \tag{6}$$

yielding:

$$\begin{pmatrix} \boldsymbol{U}_p \\ \boldsymbol{U}_f \end{pmatrix} := \mathcal{H}_{T_{ini}+N}\left(\boldsymbol{u}^d\right), \tag{7}$$

$$\begin{pmatrix} \boldsymbol{Y}_p \\ \boldsymbol{Y}_f \end{pmatrix} := \mathcal{H}_{T_{ini}+N}\left(\boldsymbol{y}^d\right), \tag{8}$$

wherein $\boldsymbol{U}_p$, $\boldsymbol{Y}_p$ each represent the first $T_{ini}$ block rows of the respective Hankel matrix in (7) and (8), respectively, and $\boldsymbol{U}_f$, $\boldsymbol{Y}_f$ each represent the last $N$ block rows of the respective Hankel matrix in (7) and (8), respectively.

According to Willems' fundamental lemma, if a component of a response signal of a controllable linear time-invariant system is persistently exciting of sufficiently high order, then the windows of the signal span the full system behavior. The lemma is applied to obtain conditions under which the state trajectory of a state representation spans the whole state space (Jan C. Willems, Ivan Markovsky, Paolo Rapisarda, and Bart L.M. De Moor, "A Note on Persistency of Excitation," 43rd IEEE Conference on Decision and Control December 14-17, 2004 Atlantis, Paradise Island, Bahamas).

In particular, the signals $\boldsymbol{u}^d, \boldsymbol{y}^d$ are persistently exciting of order $L$ if the Hankel matrices $\mathcal{H}_L\left(\cdot\right)$ are of full rank.

The reference trajectory is given as

$$\boldsymbol{r} = \left(\boldsymbol{r}_0, \boldsymbol{r}_1, \cdots\right), \tag{9}$$

which is a temporal sequence of reference vectors $\boldsymbol{r}_i$ at subsequent time steps $i$, each reference vector comprising a target value for the at least one output quantity, which is here:

$$\boldsymbol{r}_i = \left(f_{tar,i}, U_{tar,i}\right)^T, \tag{10}$$

with the target frequency $f_{tar,i}$ and the target voltage amplitude $U_{tar,i}$ at time step $i$.

The target frequency $f_{tar,i}$ and the target voltage amplitude $U_{tar,i}$ may be constant nominal values, namely constant for each time step i, e.g., 50 Hz and 230 V for Europe, or 60 Hz and 110 V for the USA.

The initial data is provided as an initial input vector (having $T_{ini}$ vector-valued elements, and thus $m$ x $T_{ini}$ scalar elements)

$$\boldsymbol{u}_{ini} = \left(\boldsymbol{u}_{ini,0}, \boldsymbol{u}_{ini,1}, \cdots, \boldsymbol{u}_{ini,T_{ini}-1}\right)^T, \tag{11}$$

with

$$\boldsymbol{u}_{ini,i} = \left(P_{ini,i}, Q_{ini,i}\right)^T, \qquad (12)$$

with initial active power values $P_{ini,i}$ and reactive power values $Q_{ini,i}$ for each element $i$, and an initial output vector (having $T_{ini}$ vector-valued elements, and thus $p \times T_{ini}$ scalar elements)

$$\boldsymbol{y}_{ini} = \left(\boldsymbol{y}_{ini,0}, \boldsymbol{y}_{ini,1}, \cdots, \boldsymbol{y}_{ini,T_{ini}-1}\right)^T, \qquad (13)$$

with

$$\boldsymbol{y}_{ini,i} = \left(f_{ini,i}, U_{ini,i}\right)^T, \qquad (14)$$

with initial frequency values $f_{ini,i}$ and voltage amplitude values $U_{ini,i}$ for each element $i$.

Further, a set of constraints may be given as:

$$\mathcal{U} \subseteq \mathbb{R}^m, \qquad (15)$$

as an input constraint for the $m$ input quantities, here with $m = 2$, and

$$\mathcal{Y} \subseteq \mathbb{R}^p, \qquad (16)$$

as an output constraint for the $p$ output quantities, here with $p = m = 2$, and an output cost matrix

$$\boldsymbol{Q} \in \mathbb{R}^{p \times p}, \qquad (17)$$

and a control cost matrix

$$\boldsymbol{R} \in \mathbb{R}^{m \times m}. \qquad (18)$$

However, in a preferred embodiment, the control cost matrix R is **0**, since signals are generated to which it is hard - or even meaningless - to assign any costs.

In an embodiment, as the control input vector $u$, a sequence of $N > 1$ subsequent control vectors $\boldsymbol{u}_j$ is calculated. Preferably, also the predicted output vector $y$ is calculated as a sequence of $N > 1$ subsequent predicted output vectors $\boldsymbol{y}_j$.

The control input vector $u$ - having the subsequent control vectors $\boldsymbol{u}_j$ as $N$ vector-valued elements, and thus $m \times N$ scalar elements - and the predicted output vector $y$ - having the subsequent predicted output vectors $\boldsymbol{y}_j$ as $N$ vector-valued elements, and thus p x $N$ scalar elements - are now calculated for a prediction horizon of $N$ time steps by solving the following problem at a current time step $t$, with summation over time steps $j$ and $0 < t < N- 1$:
subject to:

$$\min_{\boldsymbol{g,u,y}} \sum_{j=0}^{N-1} \left( \left\| \boldsymbol{y}_j - \boldsymbol{r}_{t+j} \right\|_Q^2 + \left\| \boldsymbol{u}_j \right\|_R^2 \right)$$

$$\begin{pmatrix} \boldsymbol{U}_p \\ \boldsymbol{Y}_p \\ \boldsymbol{U}_f \\ \boldsymbol{Y}_f \end{pmatrix} \boldsymbol{g} = \begin{pmatrix} \boldsymbol{u}_{ini} \\ \boldsymbol{y}_{ini} \\ \boldsymbol{u} \\ \boldsymbol{y} \end{pmatrix} \qquad (19)$$

$$\boldsymbol{u}_j \in \mathcal{U}, \forall j \in \{0, \cdots, N-1\}$$

$$\boldsymbol{y}_j \in \mathcal{Y}, \forall j \in \{0, \cdots, N-1\}.$$

with:

$$\|x\|_X^2 := x^T X x \qquad (20)$$

for any vector $x$ and Matrix $X$.

Preferably only a subset of $k < N$ of the subsequent control vectors $u_i$ - $k$ being referred to as control horizon - are used as the actual control vector $u_a$ with elements $u_{a,j}$:

$$u_{a,j} = u_j, \forall j \in \{0, \cdots, k-1\}. \qquad (21)$$

The microgrid is controlled in the time window from $(t + 1)$ to $t + k$ with the actual control vector $u_a$:

$$u_{a,j} = u_a^{t+1+j}, \forall j \in \{0, \cdots, k-1\}, \qquad (22)$$

equation (22) meaning that the element $u_{a,j}$ (which itself is a vector comprising an active power value and a reactive power value as vector elements) is used to control the at least one power source at the time step $t + 1 + j$.

The actual output vector $y_a$ is measured upon controlling the at least one power source as the response of the microgrid to the control and any further changes in the time window from $(t + 1)$ to $t + k$, such as load changes, yielding

$$y_a = (y_{a,0}, \cdots, y_{a,k-1})^T, \qquad (23)$$

and

$$y_{a,j} = y_a^{t+1+j}, \forall j \in \{0, \cdots, k-1\}, \qquad (24)$$

equation (24) meaning that the element $y_{a,j}$ (which itself is a vector comprising a frequency value and a voltage amplitude value as vector elements) is measured at the time step $t + 1 + j$.

In an embodiment, $N$ equals from 5 to 70, preferably from 10 to 50. This choice, in particular, makes sure that the voltage and frequency at the AC bus converge to the nominal values following a load ramp on a short time scale, even with latencies as large as, e.g. 500 ms.

Additionally, or in the alternative, $k$ equals from 1 to 3, preferably $k$ equals 1. Advantageously, the algorithm allows for a very precise prediction when $k$ is in this range or has the respective value.

In the subsequent time step $t' = t + k$, the initial data is updated by setting - the equals sign being understood as an assignment operator in the following equations (25) to (28) -:

$$u_{ini,i} = u_{ini,i+k}, \forall i \in \{0, \cdots, T_{ini} - 1 - k\} \qquad (25)$$

$$u_{ini,i} = u_{a,j=i-(T_{ini}-k)}, \forall i \in \{T_{ini} - k, \cdots, T_{ini} - 1\} \text{ and } j \in \{0, \cdots, k-1\} \qquad (26)$$

$$y_{ini,i} = y_{ini,i+k}, \forall i \in \{0, \cdots, T_{ini} - 1 - k\} \qquad (27)$$

$$y_{ini,i} = y_{a,j=i-(T_{ini}-k)}, \forall i \in \{T_{ini} - k, \cdots, T_{ini} - 1\} \text{ and } j \in \{0, \cdots, k-1\}, \qquad (28)$$

and the process is repeated by solving the problem of equation (19) at the time step $t' = t + k$.

Preferably, this scheme is iterated in an ongoing manner during the operation of the microgrid.

In an embodiment, a single time step has length of 10 ms to 5 s, preferably from 20 ms to 2 s, preferably from 50 ms to 1.5 s, preferably from 100 ms to 1 s. Thus, the whole iteration is repeated with a frequency from 0.2 Hz to 100 Hz, preferably from 0.5 Hz to 50 Hz, preferably from 0.7 Hz to 20 Hz, preferably from 1 Hz to 10 Hz.

In an embodiment, in a first step, (19) is solved at the time step $t$ for an optimal $g^*$; in a second step, an optimal control input vector $u^*$ is calculated as

$$u^* = U_f g^*; \qquad (29)$$

in a third step, the actual control vector $\boldsymbol{u}_a$ is constructed of the first $k$ elements of $\boldsymbol{u}^*$; and in a fourth step, at the subsequent time $t' = t + k$, the initial data is updated according to equations (25) to (28). In a fifth step, the first step is repeated at the time step $t' = t + k$, and so forth. In particular, since preferably $\boldsymbol{R} = \boldsymbol{0}$, the last term of the sum in (19) vanishes, and one can calculate a multitude of different vectors $\boldsymbol{g'}$, from solving $\boldsymbol{U}_p\, \boldsymbol{g} = \boldsymbol{u}_{ini}$ or $\boldsymbol{Y}_p\, \boldsymbol{g} = \boldsymbol{y}_{ini}$, then calculate a $\boldsymbol{y'} = \boldsymbol{Y}_f\boldsymbol{g'}$ for each $\boldsymbol{g'}$, then optimize $\boldsymbol{g'}$ and $\boldsymbol{y'}$ by minimizing the sum of (19) to obtain the optimal $\boldsymbol{g}^*$ in the first step, and finally calculate $\boldsymbol{u}^*$ from (29) in the second step.

In an embodiment, a more sophisticated problem (19') is used instead of (19) in order to adapt to noise: subject to:

$$\min_{\boldsymbol{g},\boldsymbol{u},\boldsymbol{y}} \sum_{j=0}^{N-1} \left( \left\|\boldsymbol{y}_j - \boldsymbol{r}_{t+j}\right\|_Q^2 + \left\|\boldsymbol{u}_j\right\|_R^2 \right) + \lambda_g \|\boldsymbol{g}\|_1 + \lambda_y \left\|\boldsymbol{\sigma}_y\right\|_1$$

$$\begin{pmatrix} \widehat{\boldsymbol{U}}_p \\ \widehat{\boldsymbol{Y}}_p \\ \widehat{\boldsymbol{U}}_f \\ \widehat{\boldsymbol{Y}}_f \end{pmatrix} \boldsymbol{g} = \begin{pmatrix} \boldsymbol{u}_{ini} \\ \boldsymbol{y}_{ini} \\ \boldsymbol{u} \\ \boldsymbol{y} \end{pmatrix} + \begin{pmatrix} \boldsymbol{0} \\ \boldsymbol{\sigma}_y \\ \boldsymbol{0} \\ \boldsymbol{0} \end{pmatrix} \qquad (19')$$

$$\boldsymbol{u}_k \in \mathcal{U}, \forall k \in \{0, \cdots, N-1\}$$

$$\boldsymbol{y}_k \in \mathcal{Y}, \forall k \in \{0, \cdots, N-1\},$$

with an auxiliary slack variable $\boldsymbol{\sigma}_y \in \mathbb{R}^{T_{ini}p}$, and regularization parameters $\lambda_g, \lambda_y \in \mathbb{R}_{>0}$, and $(\hat{\boldsymbol{U}}_p\ \hat{\boldsymbol{Y}}_p\ \hat{\boldsymbol{U}}_f\ \hat{\boldsymbol{Y}}_f)^T$ representing a low-rank matrix approximation of $(\boldsymbol{U}_p\ \boldsymbol{Y}_p\ \boldsymbol{U}_f\ \boldsymbol{Y}_f)^T$.

In particular, the regularization parameters $\lambda_g$, $\lambda_y$, the parameters $T$, $N$, $T_{ini}$, and the Matrices $\boldsymbol{Q}$ and $\boldsymbol{R}$ are hyperparameters of the algorithm which are preferably optimized.

In particular, the regularization parameter $\lambda_g$ is primarily used to manage inexact data. Regularization is applied to address issues that arise from noise, disturbances, or discrepancies between the true data-generating system, (e.g., when the system is not perfectly linear time-invariant (LTI)). The parameter $\lambda_g$ controls the degree of regularization, striking a balance between fitting the model closely to the data and maintaining the desired system behavior. This balance may be relevant for robust performance, particularly in the presence of data imperfections. $\lambda_y$ specifically pertains to the output. This parameter controls the trade-off between the fidelity of the model's output and its ability to generalize. Essentially, $\lambda_y$ determines how strictly the model's output should adhere to the observed data versus allowing some deviation to potentially achieve better generalization or robustness, particularly in the presence of noise. The output cost matrix $\boldsymbol{Q}$ is intended to penalize tracking errors. By tuning $\boldsymbol{Q}$, the system's tracking performance can be enhanced, and control errors can be minimized.

In an embodiment, $T$ is at least 200, preferably at least 500, preferably at least 800, preferably not greater than 1000. In addition, or in the alternative, $\lambda_g$ may be chosen to be at most 1000, preferably at most 500, preferably at most 100. In addition, or in the alternative, $\lambda_y$ may be chosen to be at most 5000, preferably at most 2500, preferably at most 1000, preferably at most 100.

In an embodiment, as the at least one power source a grid forming voltage source converter is controlled. Advantageously, the microgrid can be completely governed in the island mode by controlling the grid forming voltage source converter in order to define and maintain both voltage amplitude and frequency.

In the context of the present technical teachings, a grid forming voltage source converter is understood to mean a converter which can adjust its output power and voltage amplitude, in particular in response to grid conditions, and preferably to coordinate with other power sources to balance supply and demand. In particular, a grid forming converter is a converter which is able to adjust its output active power and reactive power, in particular to maintain stable values for frequency and voltage amplitude even upon load changes.

Preferably, the grid forming voltage source converter is an inverter.

In an embodiment, additionally at least one grid following voltage source converter is controlled as a further power source of the at least one power source. Advantageously, additional power sources can be integrated into the microgrid in order to meet larger power demands. The at least one grid following voltage source converter may follow the grid forming voltage source converter.

In the context of the present technical teachings, a grid following voltage source converter is understood to mean a converter which is adapted to synchronise its output with voltage and frequency on a grid.

Preferably, the grid following voltage source converter is an inverter.

In an embodiment, a static load is electrically coupled to the common connecting point.

In an embodiment, the at least one power source is a constant - or controllable - power source. This is in particular beneficial in combination with a grid forming voltage source converter in order to guarantee stable and persistent values for both frequency and voltage amplitude.

In the context of the present technical teachings, a constant and/or controllable power source is understood to mean a power source which can provide constant, yet preferably controllable or adjustable power on a timescale of at least an hour, preferably at least several hours, preferably at least several days.

In an embodiment, such constant - and/or controllable - power source comprises an energy storage device in combination with a voltage source converter, wherein preferably the energy storage device is a mechanical, electrochemical, magnetic, thermal or chemical energy storage device, preferably a battery.

In the alternative, the at least one power source is a variable power source. With the method disclosed herein, it is advantageously possible to stably and easily use variable power sources in the microgrid.

In the context of the present technical teachings, a variable power source is understood to mean a power source which provides varying power depending on external circumstances.

In an embodiment, such a variable power source is a renewable energy source, in particular a wind turbine or a photovoltaic plant.

In an embodiment, the microgrid comprises at least two power sources, namely at least one constant - and/or controllable - power source as a first power source, and at least one variable power source as a second power source.

In an embodiment, the historical data is provided prior to operating the microgrid.

Preferably, the historical data is provided from prior test runs or a simulation. This is the simplest way to implement the method.

Additionally, or in the alternative, the historical data is collected and updated during operation of the microgrid. In this case, the algorithm advantageously can be further updated in addition to updating the initial data; thus, the algorithm is particularly flexible and able to react to even unforeseen developments - both internal and external.

In an embodiment, the microgrid comprises more than one power source, and the method includes droop control for load sharing between the power sources, preferably both for frequency and voltage amplitude. The method may further include supervisory control to complement the droop control, in particular to adapt, in particular shift, the droop slopes upon load changes in order to maintain constant values for frequency and voltage amplitude.

In an embodiment, the microgrid is operated in an island mode.

According to a second aspect, the objective is in particular achieved by providing a computer program comprising instructions which, when the program is executed by a computer, cause the computer to carry out a method according to the invention, or at least according to any of the above-disclosed embodiments of the method. With respect to the computer program, in particular the same advantages are achieved as explained above in relation to the method.

According to a third aspect, the objective is in particular achieved by providing a control device for controlling a microgrid, the control device being adapted to carry out a method according to the invention, or according to at least one of the above-disclosed embodiments of the method. With respect to the control device, in particular the same advantages are achieved as explained above in relation to the method or the computer program.

In an embodiment, the control device is adapted to employ droop control in order to manage load sharing between different power sources, preferably both for frequency and voltage amplitude. The control device may further be adapted to employ supervisory control to complement the droop control, in particular to adapt, in particular shift, the droop slopes upon load changes in order to maintain constant values for frequency and voltage amplitude.

According to a fourth aspect, the objective is in particular achieved by providing a microgrid having at least one power source and at least one dynamic load, wherein the at least one power source and the at least one dynamic load are electrically coupled via an AC bus as a common connecting point, wherein the microgrid further comprises a control device according to the invention or according to at least one of the above-disclosed embodiments of the control device, the control device being operatively connected to and adapted to control the at least one power source. With respect to the microgrid, in particular the same advantages are achieved as explained above in relation to the method, the computer program or control device.

In an embodiment, the microgrid comprises, as the at least one power source, an energy storage device in combination with a voltage source converter. The energy storage device may be a mechanical, electrochemical, magnetic, thermal or chemical energy storage device, preferably a battery. The voltage source converter preferably is an inverter.

In an embodiment, the microgrid further comprises a renewable energy source, preferably a photovoltaic plant or a wind turbine, as the at least one power source.

The invention is explained below in further detail with reference to the drawing. In the drawing:

Figure 1    shows an embodiment of a microgrid having an embodiment of a control device, and

Figure 2    shows a schematic representation of an embodiment of a method for operating the microgrid.

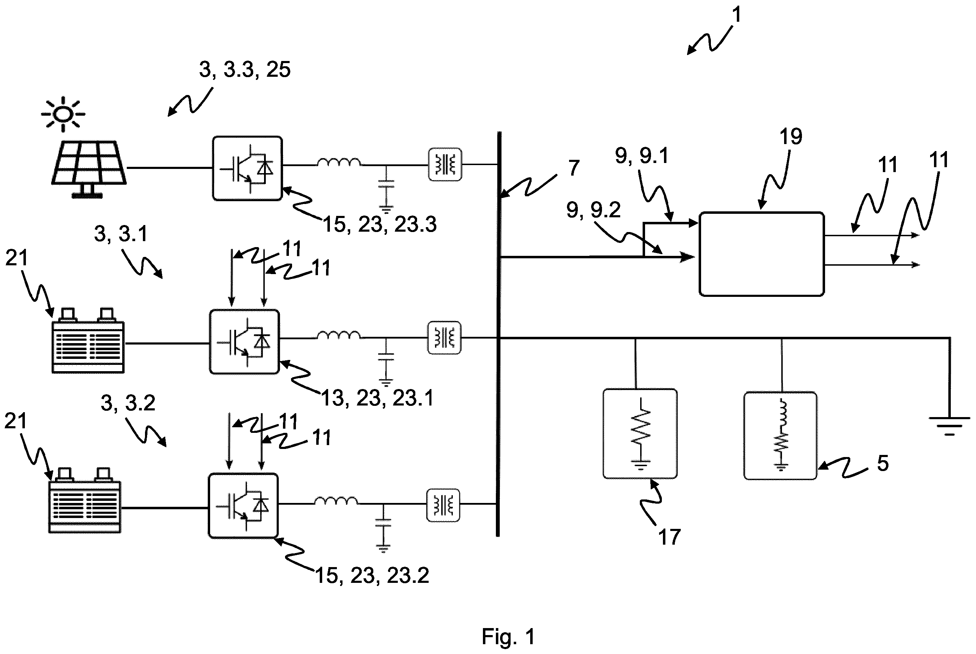

**Fig. 1** shows an embodiment of a microgrid 1 comprising an embodiment of a control device 19, the control device 19 being adapted to carry out an embodiment of a method for operating a microgrid 1.

The microgrid 1 has at least one power source 3 and at least one dynamic load 5, wherein the at least one power source 3 and the at least one dynamic load 5 both are electrically coupled via an AC bus as a common connecting point 7. The control device 19 is operatively connected to and adapted to control the at least one power source 3.

As depicted in figure 1, the microgrid 1 comprises, as the at least one power source 3, a first power source 3.1, which comprises an energy storage device 21 in combination with a voltage source converter 23 as a first voltage source converter 23.1. The microgrid 1 further comprises a second power source 3.2, which also comprises an energy storage device 21 in combination with a voltage source converter 23 as a second voltage source converter 23.2. The energy storage devices 21 each may be a mechanical, electrochemical, magnetic, thermal or chemical energy storage device; preferably it is a battery.

In particular, the first voltage source converter 23.1 is a grid forming voltage source converter 13. Further, the second voltage source converter 23.2 is a grid following voltage source converter 15.

The embodiment of the microgrid 1 further comprises a renewable energy source, preferably a photovoltaic plant 25 or a wind turbine, as a third power source 3.3, having a third voltage source converter 23.3, which is a grid following voltage source converter 15.

The first and second power sources 3.1, 3.2 are controllable power sources 3, and the third power source 3.3 is a variable power source 3.

Preferably, the control device 19 is adapted to employ droop control in order to manage load sharing between the different power sources 3, most preferably both for frequency and voltage amplitude. The control device 19 may further be adapted to employ supervisory control to complement the droop control, in particular to adapt, in particular shift, the droop slopes upon load changes in order to maintain constant values for frequency and voltage amplitude.

A static load 17 may electrically be coupled to the common connecting point 7.

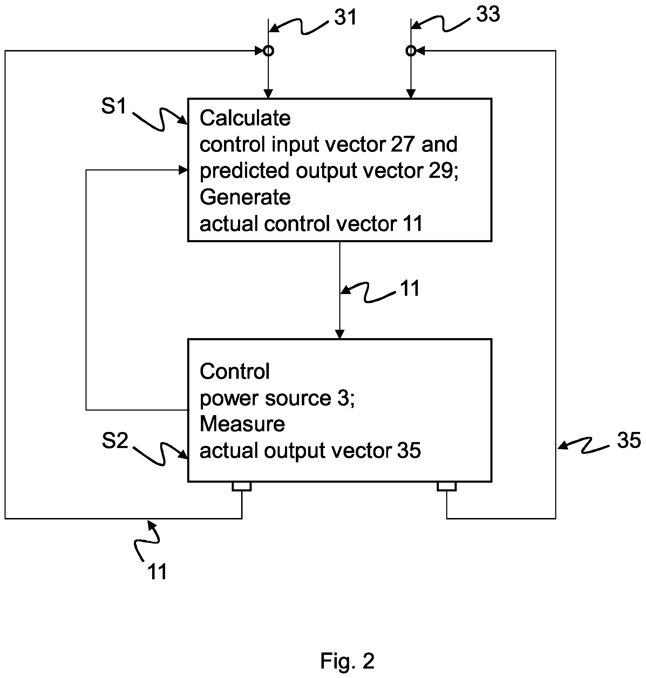

**Fig. 2** shows a schematic representation of an embodiment of the method for operating the microgrid 1.

In a first step S1, based on historical data comprising a historical input vector of two input quantities of the microgrid, namely active power and reactive power, and a historical output vector of at least two output quantities 9 of the microgrid 11, namely a voltage amplitude 9.1 and a frequency 9.2 - see figure 1 - at the common connecting point 7, and a reference trajectory comprising target values, e.g. 50 Hz and 230 V, for the at least two output quantities, a control input vector 27 is calculated by minimizing a deviation between the target values and a predicted output vector 29, preferably using a direct data driven or behavioral predictive algorithm, in particular Data-Enabled Predictive Control (DeePC) in accordance with one of equations (19) or (19') given above. In the alternative, or additionally, the historical data is used as observed raw data included in prior knowledge of the microgrid, preferably to achieve a direct map from the historical data to the control input vector without an identification of a model.

In a second step S2, at least one of the power sources 3 is controlled with an actual control vector 11 - see figure 1 -, the actual control vector 11 being at least a subset of the control input vector 27.

Preferably, in the first step S1, the control input vector 27 is calculated further based on initial data, comprising an initial input vector 31 of the two input quantities, and an initial output vector 33 of the two output quantities, wherein, in the second step S2, an actual output vector 35 of the two output quantities is measured upon controlling the at least one power source 3 with the actual control vector 11.

The first and second steps S1 and S2 are repeated, wherein, in the first step S1, the initial input vector 31 is updated with the actual control vector 11, and the initial output vector 33 is updated with the actual output vector 35.

In an embodiment, the historical data may be provided prior to operating the microgrid 1. Preferably, the historical data is provided from prior test runs or a simulation. Additionally, or in the alternative, the historical data may be collected and updated during operation of the microgrid 1.

**Claims**

1. Method for operating a microgrid (1), wherein the microgrid (1) comprises at least one power source (3) and at least one dynamic load (5), the at least one power source (3) and the at least one dynamic load (5) being electrically coupled via an AC bus as a common connecting point (7), wherein

   - in a first step S1: based on historical data comprising a historical input vector of at least one input quantity, a historical output vector of at least two output quantities (9) of the microgrid, and a reference trajectory comprising target values for the at least two output quantities, a control input vector (27) is calculated by minimizing a deviation between the target values and a predicted output vector (29), wherein
   - in a second step S2: the at least one power source (3) is controlled with at least a subset of the control input vector (27) as an actual control vector (11), and wherein

- the at least two output quantities (9) comprise a voltage amplitude (9.1) and a frequency (9.2) at the AC bus, and the reference trajectory comprises nominal values for the voltage amplitude (9.1) and the frequency (9.2) as the target values.

2. Method according to claim 1, wherein

- in the first step S1: the control input vector (27) is calculated further based on an initial input vector (31) of the at least one input quantity and an initial output vector (33) of the at least two output quantities (9), wherein
- in the second step S2: an actual output vector (35) of the at least two output quantities (9) is measured upon controlling the at least one power source (3) with the actual control vector (11), and wherein
- the first and second steps S1 and S2 are repeated, wherein in the first step S1 the initial input vector (31) is updated with the actual control vector (11), and the initial output vector (33) is updated with the actual output vector (35).

3. Method according to any of the preceding claims, wherein the control input vector (27) is calculated in the first step S1 using a direct data driven or behavioral predictive algorithm, and wherein preferably Data-Enabled Predictive Control (DeePC) is used as the behavioral or direct data driven predictive algorithm.

4. Method according to any of the preceding claims, wherein at least two input quantities are used as the at least one input quantity, and preferably the at least two input quantities are an active power and a reactive power.

5. Method according to any of the preceding claims, wherein as the control input vector (27), a sequence of $N > 1$ subsequent control vectors is calculated, wherein preferably only a subset of $k < N$ of the subsequent control vectors are used as the actual control vector (11), wherein preferably $N$ equals from 5 to 70, preferably from 10 to 50, and/or wherein $k$ equals from 1 to 3, preferably 1.

6. Method according to any of the preceding claims, wherein as the at least one power source (3) a grid forming voltage source converter (13) is controlled.

7. Method according to claim 6, wherein additionally at least one grid following voltage source converter (15) is controlled as a further power source (3) of the at least one power source (3).

8. Method according to any of the preceding claims, wherein the at least one power source (3) is a constant and/or controllable power source, or a variable power source (3).

9. Method according to any of the preceding claims, wherein the historical data is

- provided prior to operating the microgrid (1), preferably from prior test runs or a simulation, and/or
- collected and updated during operation of the microgrid (1).

10. Method according to any of the preceding claims, wherein the microgrid (1) is operated in an island mode.

11. Computer program, comprising instructions which, when the program is executed by a computer, cause the computer to carry out the method of at least one of claims 1 to 10.

12. Control device (19) for controlling a microgrid (1), the control device (19) being adapted to carry out the method of at least one of claims 1 to 10.

13. Microgrid (1), having at least one power source (3) and at least one dynamic load (5), wherein the at least one power source (3) and the at least one dynamic load (5) are electrically coupled via an AC bus as a common connecting point (7), wherein the microgrid (1) further comprises a control device (19) according to claim 12, the control device (19) being operatively connected to and adapted to control the at least one power source (3).

14. Microgrid (1) according to claim 13, wherein the microgrid (1) comprises, as the at least one power source (3), an energy storage device (21) in combination with a voltage source converter (23).

15. Microgrid (1) according to at least one of claims 13 and 14, wherein the microgrid (1) further comprises a photovoltaic plant (25) as the at least one power source (3).

Fig. 1

EP 4 738 636 A1

S1 → Calculate
control input vector 27 and
predicted output vector 29;
Generate
actual control vector 11

31

33

11

Control
power source 3;
Measure
actual output vector 35

S2

35

11

Fig. 2

| | Europäisches Patentamt European Patent Office Office européen des brevets | **EUROPEAN SEARCH REPORT** | **Application Number** EP 24 20 9989 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RAEISPOUR MOHAMMAD ET AL: "Robust Hierarchical Control of VSC-Based Off-Grid AC Microgrids to Enhancing Stability and FRT Capability Considering Time-Varying Delays", IEEE JOURNAL OF EMERGING AND SELECTED TOPICS IN POWER ELECTRONICS, IEEE, PISCATAWAY, NJ, USA, vol. 9, no. 6, 19 August 2020 (2020-08-19) , pages 7159-7172, XP011890279, ISSN: 2168-6777, DOI: 10.1109/JESTPE.2020.3017713 [retrieved on 2021-11-29] * figures 1,4 * * page 7160 * ----- | 1-15 | INV. H02J3/38 H02J3/32 |
| A | HUSSIEN ABDELAZIM G ET AL: "An in-depth survey of the artificial gorilla troops optimizer: outcomes, variations, and applications", ARTIFICIAL INTELLIGENCE REVIEW, SPRINGER NETHERLANDS, DORDRECHT, vol. 57, no. 9, 12 August 2024 (2024-08-12), XP037962223, DOI: 10.1007/S10462-024-10838-8 [retrieved on 2024-08-12] * the whole document * ----- | 1-15 | **TECHNICAL FIELDS SEARCHED (IPC)** H02J |

The present search report has been drawn up for all claims

| Place of search | Date of completion of the search | Examiner |
|---|---|---|
| Munich | 6 May 2025 | Zettler, Karl-Rudolf |

EPO FORM 1503 03.82 (P4C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. COULSON** ; **J. LYGEROS** ; **F. DÖRFLER**. Data-Enabled Predictive Control: In the Shallows of the DeePC. *18th European Control Conference (ECC), Naples, Italy, 2019*, 2019, 307-312
- **I. MARKOVSKY** ; **L. HUANG** ; **DÖRFLER**. Data-driven control based on the behavioral approach: From theory to applications in power systems. *IEEE Control Systems Magazine*, 2023, vol. 43 (5), 28-68

- **JAN C. WILLEMS** ; **IVAN MARKOVSKY** ; **PAOLO RAPISARDA** ; **BART L.M. DE MOOR**. A Note on Persistency of Excitation. *43rd IEEE Conference on Decision and Control December*, 2004, 14-17